# EUROPEAN PATENT APPLICATION

(11) **EP 4 790 614 A1**
(43) Date of publication of application: **12.08.2026**
(21) Application number: 26151453.3
(22) Date of filing: 13.01.2026
(51) Int. Cl.: G06Q 10/0639, G06Q 10/105

(54) **INFORMATION PROCESSING SYSTEM, INFORMATION PROCESSING METHOD, AND CARRIER MEANS**

(30) Priority: 07.02.2025 JP 2025019570; 27.10.2025 JP 2025181220
(71) Applicant: Ricoh Company, Ltd., Tokyo 143-8555 (JP)
(72) Inventor: Nakagawa, Jun, Tokyo, 143-8555 (JP); Suzuki, Yuuki, Tokyo, 143-8555 (JP)
(74) Representative: SSM Sandmair

(57) **Abstract**

An information processing system includes: an acquisition unit (123) to acquire comment information input by a first user in association with evaluation information on an evaluation made for the first user by a second user; and a skill analysis unit (126) to analyze an evaluation skill of the second user based on the comment information.

## Description

### BACKGROUND

### Technical Field

The present disclosure relates to an information processing system, an information processing method, and carrier means.

### Related Art

In a greatly changing business environment called VUCA (volatility, uncertainty, complexity, and ambiguity), top-down management has become less effective in companies, and each individual employee is requested to autonomously set the goal and carry out the task. Each individual employee is also expected to proactively reframe the meaning of work and the scope of responsibility and have an attitude of autonomously designing the career.

On the other hand, in actual workplaces, due to the subdivision of tasks, the goal and theme to be achieved often tend to be minor and the preconditions of the goal often change quickly. Therefore, once an atmosphere in which hard work does not pay off is created within companies, the atmosphere leads to decreased engagement in the workplaces.

In such circumstances, this contemporary workplace issue is expected to be addressed in workplaces through one-on-one meetings that provide a "regular one-on-one interactive opportunity between a supervisor and a subordinate". In order for a supervisor to prompt a subordinate to change the behavior of the subordinate, the supervisor desirably has meeting skills. The meeting skills include, for example, communication skills for meetings. Although the supervisor desirably has the meeting skills, the supervisor may struggle to improve the meeting skills.

Accordingly, Japanese Patent No. 7519976 discloses a meeting support apparatus that efficiently improves the meeting skills so that a meeting between a supervisor and a subordinate is more likely to be successful. The meeting support apparatus focuses on improvement of skills of an evaluator and features a mechanism for analyzing facial expressions and voice data obtained during a meeting and providing the evaluator with feedback but does not describe improvement of the skills of the evaluator, particularly personalized training for evaluation skills.

Japanese Patent No. 6129393 describes a goal-setting support apparatus for supporting an evaluatee in setting a goal of behavioral characteristics using a personnel evaluation system. More specifically, the system supports the evaluatee in setting a competency goal but does not include specific details about improvement of the skills of an evaluator. In particular, there is no description about providing the evaluator with personalized training and with feedback according to the skill gap of the evaluator. As a function of a general learning management system (LMS), a personal skill level is analyzed based on training attendance history and held qualifications. However, it is difficult to accurately analyze the evaluator's skill level based on information on the training attendance history and the held qualifications.

That is, in the related art, support related to a shortage of skills of an evaluator is insufficient. In current training for evaluators, all the evaluators often receive the same training and can hardly receive guidance according to individual skill gaps.

### SUMMARY

The present disclosure described herein provides an information processing system including an acquisition unit that acquires comment information input by a first user in association with evaluation information on an evaluation made for the first user by a second user, and a skill analysis unit that analyzes an evaluation skill of the second user based on the comment information.

The present disclosure described herein provides a computer-implemented method of information processing, including acquiring comment information input by a first user in association with evaluation information on an evaluation made for the first user by a second user, and analyzing an evaluation skill of the second user based on the comment information.

The present disclosure described herein provides carrier means carrying computer readable code for controlling a computer system to carry out the information processing method described above.

According to one aspect of the present disclosure, an evaluation skill of the second user is appropriately analyzed, so that the fairness and quality of evaluation are improved.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1A is a diagram illustrating an example of a configuration of an evaluator education system;
FIG. 1B is a diagram for describing an example of a training content display process in the evaluator education system;
FIG. 1C is a diagram for describing an example of the training content display process in the evaluator education system;
FIG. 1D is a diagram for describing an example of the training content display process in the evaluator education system;
FIG. 1E is a diagram for describing an example of the training content display process in the evaluator education system;
FIG. 2 is a diagram of an example of a hardware configuration of an evaluator evaluation system and a personnel evaluation system;
FIG. 3 is a flowchart of an example of a transmission process of evaluation information or the like in the personnel evaluation system; and
FIG. 4 is a flowchart of an example of the training content display process in the evaluator evaluation system.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An evaluator education system according to an embodiment that is provided with an information processing system, an information processing method, and a program will be described in detail below with reference to the accompanying drawings.

The evaluator education system according to the present embodiment is an evaluator training system that uses artificial intelligence (AI) to analyze data acquirable from a personnel evaluation system, estimates weaknesses in personnel evaluation skills of an evaluator, and automatically recommends interactive training content based on the estimated weaknesses.

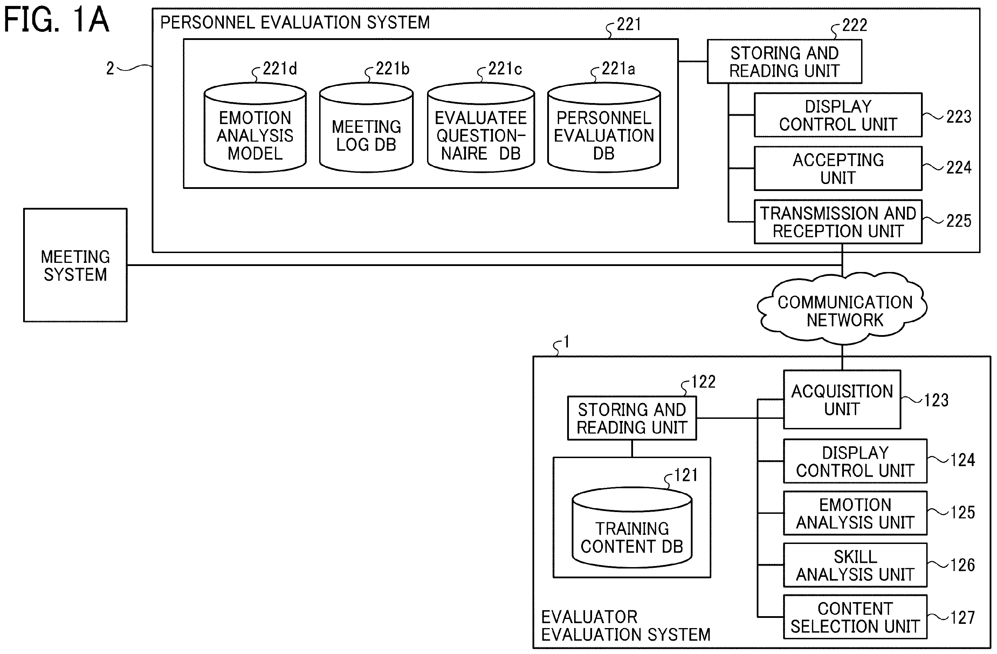

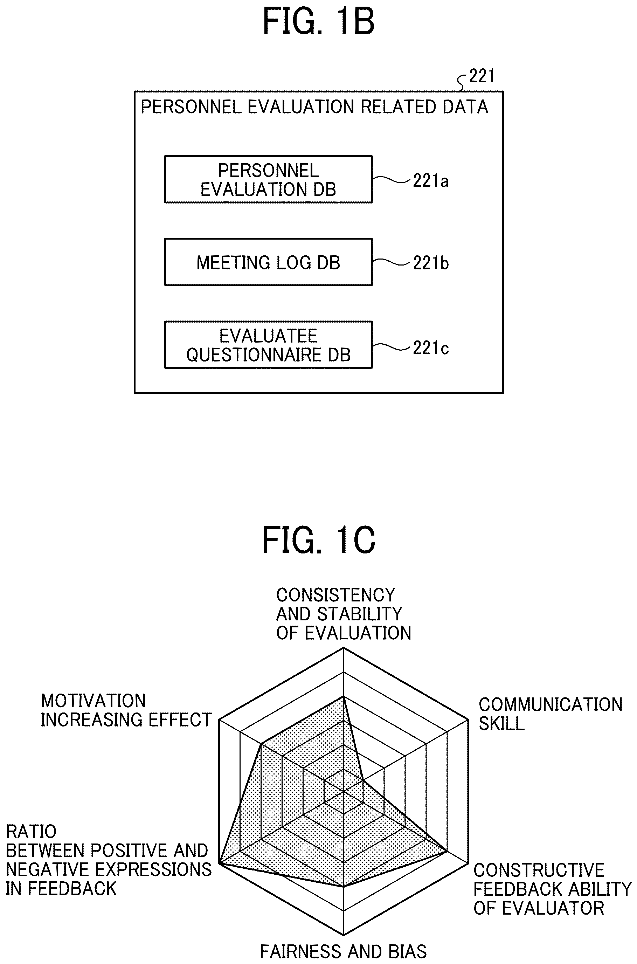

FIG. 1A is a diagram illustrating an example of a configuration of the evaluator education system. FIGs. 1B to 1E are diagrams for describing an example of a training content display process in the evaluator education system. The evaluator education system (i.e., the evaluator training system) includes a personnel evaluation system 2 and an evaluator evaluation system 1. The personnel evaluation system 2 and the evaluator evaluation system 1 are connected to each other via a communication network such as the Internet.

As illustrated in FIG. 1A, the personnel evaluation system 2 includes a storage unit 221, a storing and reading unit 222, a display control unit 223, an accepting unit 224, and a transmission and reception unit 225.

For the purpose of improving the skills of evaluators, the storage unit 221 stores data of four categories, i.e., a personnel evaluation database (DB) 221a, a meeting log DB 221b, an evaluatee questionnaire DB 221c, and an emotion analysis model 221d.

The personnel evaluation DB 221a includes personnel evaluation input data including an evaluation score input for an evaluatee by an evaluator and a feedback comment input by the evaluatee. In this disclosure, the evaluatee is an example of a first user who inputs a feedback comment, and the evaluator is an example of a second user who evaluates the feedback comment input by the evaluatee who is the first user. The personnel evaluation input data is input as text in input fields in the personnel evaluation system 2. The evaluation score is an example of evaluation information. The feedback comment is an example of comment information. The personnel evaluation DB 221a includes text data such as instructions, points to be improved, and evaluation reasons provided to the evaluatee by the evaluator. The text data is analyzed using natural language processing (NLP) technology. Specifically, the analysis of the personnel evaluation DB 221a using the NLP technology provides data for grasping a ratio between positive and negative expressions, specificity, presence or absence of advice for improvement, the communication style of the evaluator, and the quality of evaluation. Data indicating presence or absence of specific expressions such as "Please improve ..." and "I encourage you to work on ... before our next meeting" is also collected.

The meeting log DB 221b includes data obtained in a personnel evaluation meeting conducted by an evaluator and an evaluatee. The data is an example of conversation information and includes behavioral data such as contents of utterances, frequency of remarks, tone, positive or negative expressions, and reactions to the counterpart during the evaluation meeting. The meeting log DB 221b has a function of uploading a recording file that is collected as recording data and is recorded during a meeting.

The evaluatee questionnaire DB 221c includes data of answers made by evaluatees through a questionnaire function of the personnel evaluation system 2 after the evaluation meetings. The data is an example of comment information. The questionnaire includes multiple-choice and free-description questions and is designed so that the meeting details and impressions of feedback from the evaluator can be specifically grasped. The evaluatees can answer anonymously and thus are provided with an environment in which the evaluatees can feel comfortable expressing opinions so that individual feedback can be utilized by the evaluator for improvement. Specific questions include questions regarding specificity of feedback, such as "Was the feedback presented in the meeting specific?" and "Were the points to be improved and advice for the next step clear?"; questions regarding presence or absence of fairness and bias, such as "Was the content of the evaluation fair?" and "Did you feel that personal prejudice or emotion was included in the evaluation?"; questions regarding communication skills, such as "Was the evaluator's explanation given during the meeting easy to understand?" and "Was the dialogue with the evaluator smooth?"; questions regarding a balance of positive and negative expressions in feedback, such as "Was positive feedback appropriately included in the meeting?" and "Was there constructive advice regarding points to be improved?"; and questions regarding a degree of motivation increase after the meeting, such as "Did this meeting increase your motivation for work?" and "Did the feedback inspire a desire for self-growth?".

The emotion analysis model 221d is a machine learning model using training data that includes emotion data and at least one of text and voice tone. The emotion analysis model 221d may be a trained model used by an emotion analysis unit 125 of the evaluator evaluation system 1 to analyze emotions of the evaluator and the evaluatee. The emotion analysis model 221d may be a machine learning model using training data that includes emotion data and non-verbal information such as facial expressions and gestures of the evaluator and the evaluatee included in a video.

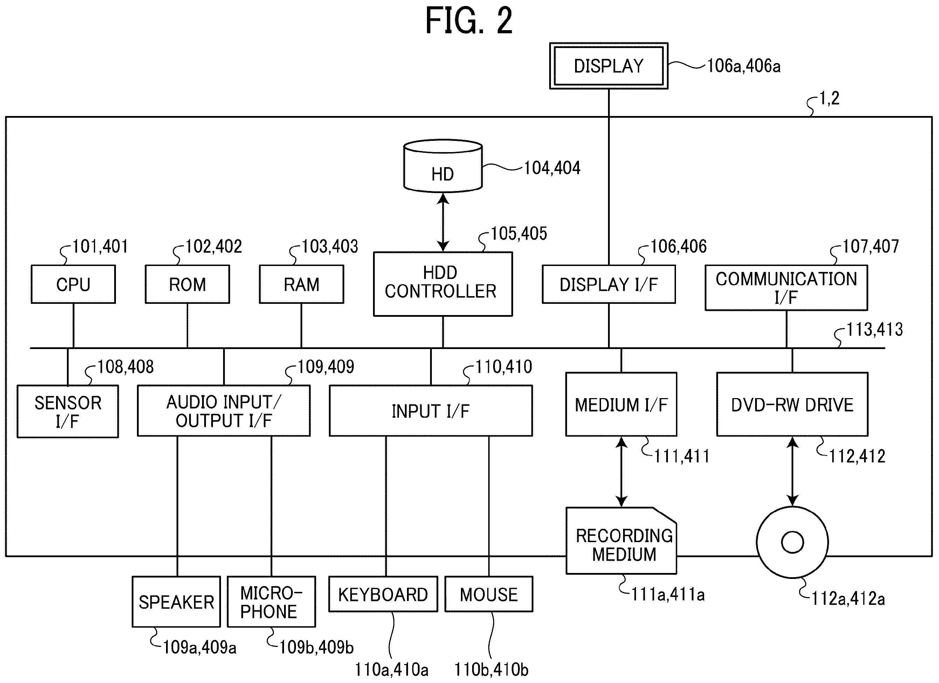

The storing and reading unit 222 writes various types of information to the storage unit 221 and reads various types of information from the storage unit 221. The display control unit 223 displays various types of information on a display such as a display 406a (see FIG. 2). The accepting unit 224 accepts input of various types of information to the personnel evaluation system 2. The transmission and reception unit 225 controls communication with external apparatuses such as a meeting system and the evaluator evaluation system 1 via a communication network.

As illustrated in FIG. 1A, the evaluator evaluation system 1 includes a storage unit 121, a storing and reading unit 122, an acquisition unit 123, a display control unit 124, the emotion analysis unit 125, a skill analysis unit 126, and a content selection unit 127. The evaluator evaluation system 1 is an example of an information processing system.

The storage unit 121 stores training content for evaluators. The storing and reading unit 122 reads training content from the storage unit 121 and writes training content to the storage unit 121.

The acquisition unit 123 controls communication with external apparatuses such as the meeting system and the personnel evaluation system 2 via the communication network. Specifically, the acquisition unit 123 is an example of an acquisition unit that acquires comment information such as a feedback comment, which is input by an evaluatee, in association with evaluation information such as an evaluation score of the evaluatee by an evaluator from the personnel evaluation system 2 (i.e., the personnel evaluation DB 221a and the evaluatee questionnaire DB 221c) as illustrated in FIG. 1B. The acquisition unit 123 may acquire the evaluation information such as the evaluation score from the personnel evaluation system 2 (i.e., the personnel evaluation DB 221a). As illustrated in FIG. 1B, the acquisition unit 123 may also acquire conversation information such as a meeting log of a meeting between the evaluator and the evaluatee from the personnel evaluation system 2 (i.e., the meeting log DB 221b). The acquisition unit 123 may acquire input information input for training content by the evaluator.

The emotion analysis unit 125 is an example of an emotion analysis unit that analyzes an emotion of the evaluatee based on the comment information. The emotion analysis unit 125 may analyze an emotion of the evaluator based on the evaluation information. The emotion analysis unit 125 may analyze an emotion of the evaluatee and an emotion of the evaluator based on the conversation information (e.g., text or voice tone). In the present embodiment, the emotion analysis unit 125 uses the emotion analysis model 221d stored in the storage unit 221 of the personnel evaluation system 2 to analyze an emotion of the evaluatee and an emotion of the evaluator based on at least one of the comment information, the evaluation information, and the conversation information. The emotion analysis unit 125 may use the emotion analysis model 221d stored in the storage unit 221 of the personnel evaluation system 2 to analyze an emotion of the evaluatee and an emotion of the evaluator based on non-verbal information such as facial expressions and gestures of the evaluatee and the evaluator included in video information corresponding to the conversation information.

The skill analysis unit 126 is a component that analyzes, from multiple perspectives, skills exhibited by the evaluator in personnel evaluation. The skill analysis unit 126 acquires pieces of data of the personnel evaluation DB 221 a, the meeting log DB 221b, and the evaluatee questionnaire DB 221c from the personnel evaluation system 2 and analyzes feedback and communication abilities of the evaluator. Specifically, the skill analysis unit 126 is an example of an analysis unit that analyzes an evaluation skill of the evaluator based on the comment information. The skill analysis unit 126 may take the evaluation information into account to analyze the evaluation skill. The skill analysis unit 126 may take the conversation information into account to analyze the evaluation skill. The skill analysis unit 126 may take the input information into account to analyze the evaluation skill. The skill analysis unit 126 may take the emotion of the evaluatee into account to analyze the evaluation skill. The skill analysis unit 126 may take the emotion of the evaluator into account to analyze the evaluation skill. The skill analysis unit 126 may take the emotion of the evaluatee and the emotion of the evaluator analyzed by the emotion analysis unit 125 into account to analyze the evaluation skill.

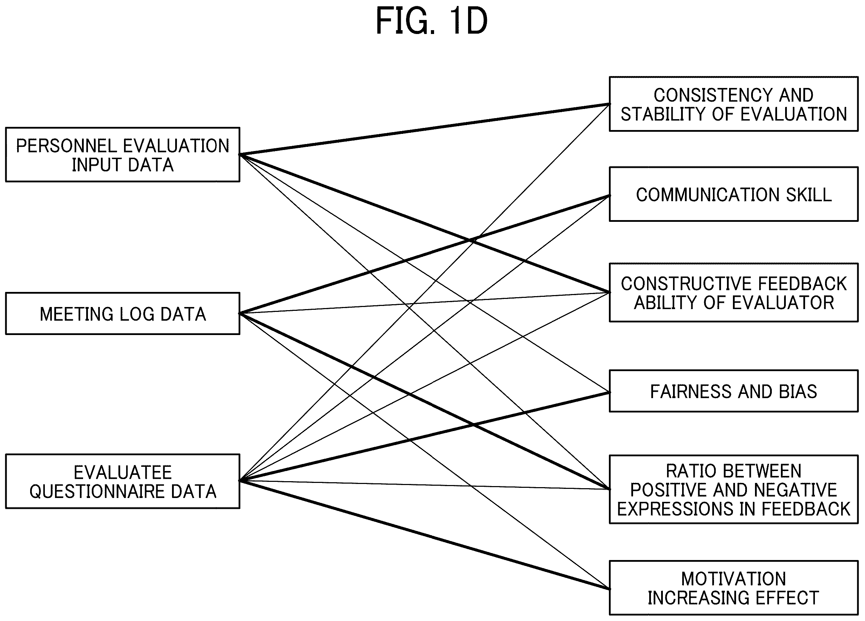

For example, as illustrated in FIGs. 1C and 1D, the skill analysis unit 126 estimates the state of the evaluation skill of the evaluator in terms of six evaluation items (1) to (6) below.

### (1) Consistency and Stability of Evaluation

The consistency and stability of evaluation indicates whether evaluation criteria are not influenced by subjectivity and circumstances of the evaluator and are stable for anyone. The consistency and stability of evaluation are an index for checking whether the same evaluation criteria are consistently applied to a plurality of evaluation targets and measuring whether the evaluation criteria of the evaluator are stable. The skill analysis unit 126 compares the evaluation score and the feedback content of the evaluator collected from the personnel evaluation DB 221a with past data to verify the consistency of the evaluation criteria. Specifically, when the evaluator evaluates the same skills based on different evaluation criteria, the skill analysis unit 126 estimates that the understanding of the evaluation criteria and stability of the evaluation skill of the evaluator are insufficient. The evaluation data is accumulated in the medium to long term, so that consistency of the evaluation criteria is ensured and training is proposed in accordance with criteria as desired.

### (2) Communication Skill

The communication skill indicates the clarity and ease of understanding in the manner of communication. The communication skill is an index for determining whether the evaluator can provide the evaluatee with instructions and feedback using easy-to-understand and specific expressions and for evaluating the clarity of the utterance content and expressions. The skill analysis unit 126 analyzes the contents of utterances, the frequency of remarks, the speaking speed, the intonation, and the frequently occurring phrases of the evaluator recorded in the meeting log DB 221b. Text data obtained using speech recognition technology is analyzed using natural language processing (NLP) technology, so that the ratio between positive and negative expressions and the specificity of wording are measured. In this manner, the communication skill of the evaluator is estimated, and a skill improvement trend becomes trackable based on the data accumulated for a long term.

### (3) Constructive Feedback Ability of Evaluator

The constructive feedback ability of the evaluator is an index indicating whether the feedback content is specific and useful for improvement. The constructive feedback ability of the evaluator is an index for evaluating whether the evaluator provides feedback including specific advice for improvement and guidance and measures how much the evaluator can present practicable action guidelines. The skill analysis unit 126 uses natural language analysis to check whether the feedback content includes specific behavioral advice such as "Please improve ..." and "... before our next meeting" and evaluates whether constructive feedback is provided. Through the analysis based on pieces of data obtained in multiple feedback sessions, a decrease in ambiguous expressions and improvement in constructiveness are quantitatively grasped.

### (4) Fairness and Bias

The fairness and bias are an index indicating whether evaluation is conducted objectively without being affected by personal attributes of the evaluatee. The fairness and bias are an index for checking whether the evaluator performs objective and fair evaluation without bias toward specific attributes such as age and gender and for evaluating whether there is no unconscious bias. In this manner, the fairness and bias of the evaluator are estimated. The skill analysis unit 126 quantifies, as a score, whether the evaluator performs consistent evaluation for a specific attribute based on the attributes (e.g., age and gender) of the evaluatees and the questionnaire answers.

### (5) Ratio between Positive and Negative Expressions in Feedback

The ratio between positive and negative expressions in feedback is an index of whether the positive feedback and the negative feedback are appropriately combined. The ratio between positive and negative expressions in feedback is an index for measuring whether positive content and negative content are appropriately balanced in feedback, and focuses on both positive encouragement and constructive comments for improvement. The skill analysis unit 126 calculates the ratio between positive and negative expressions from the meeting log DB 221b and the personnel evaluation DB 221a and estimates a balance in the feedback. When positive feedback is relatively rare and comments for improvement are relatively frequent, the skill analysis unit 126 determines that the positive feedback is insufficient.

### (6) Motivation Increasing Effect

The motivation increasing effect is an index for evaluating whether the feedback produces motivation and willingness to grow in the evaluatee and for determining whether the motivation of the evaluatee increases after the meeting. The skill analysis unit 126 quantifies the extent to which the feedback of the evaluator contributes to an increase in motivation of the evaluatee based on answers to the "degree of motivation increase after the meeting" in the evaluatee questionnaire DB 221c. Whether the evaluator can produce willingness to grow in the evaluatee is evaluated based on the accumulated questionnaire data.

Relationships between the six evaluation items for evaluators and pieces of data from the personnel evaluation DB 221a, the meeting log DB 221b, and the evaluatee questionnaire DB 221c are as follows. In terms of the (1) consistency and stability of evaluation, changes in scores and comments of multiple evaluation results accumulated in the personnel evaluation DB 221a are compared with each other to check whether the evaluator stably performs evaluation based on consistent criteria. In terms of the (2) communication skill, the contents of utterances, the frequency of remarks, the speaking speed, the tone, the intonation, and the frequently occurring phrases included in the meeting log DB 221b are converted into text by speech recognition, and the text is analyzed using natural language processing to measure the ratio between positive and negative expressions and the clarity of utterances and determine whether the utterances of the evaluator are clear. In terms of the (3) constructive feedback ability of the evaluator, whether the feedback provided by the evaluator includes specific behavioral advice is checked using dependency analysis based on the personnel evaluation DB 221a and the meeting log DB 221b to estimate a constructive feedback provision state depending on whether the feedback includes an instruction such as "I encourage you to work on ... before our next meeting", for example. In terms of the (4) fairness and bias, the questions and answers related to the fairness and bias are analyzed based on the evaluatee questionnaire DB 221c and the personnel evaluation DB 221a to verify whether the evaluator performs evaluation without being affected by personal attributes (e.g., age and gender) of the evaluatee. In terms of the (5) ratio between positive and negative expressions in feedback, positive expressions and negative expressions are extracted from feedback content based on the meeting log DB 221b and the personnel evaluation DB 221a and the ratio between positive and negative expressions is determined to measure the balance. In terms of the (6) motivation increasing effect, the extent to which the feedback of the evaluator contributes to an increase in motivation of the evaluatee is quantified based on questions and answers related to the "degree of motivation increase after the meeting" from the evaluatee questionnaire DB 221c. In this manner, the skills of the evaluator are analyzed from multiple perspectives based on appropriate data corresponding to the respective evaluation items.

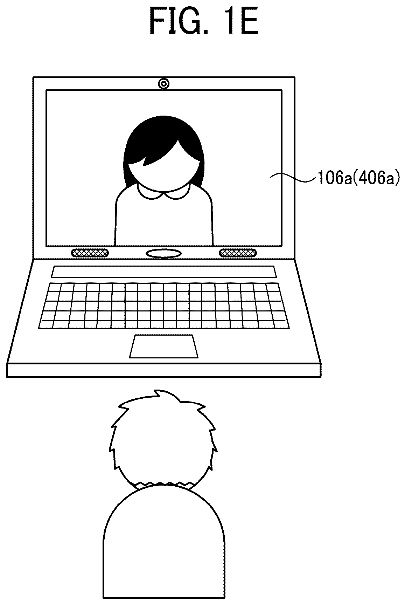

As illustrated in FIG. 1E, the display control unit 124 is an example of a display control unit that causes a display such as a display 106a (see FIG. 2) to display training content selected by the content selection unit 127 (described later). In this manner, data acquirable from the personnel evaluation system 2 is analyzed using AI, weaknesses in the evaluation skill of an evaluator are identified, and training content is automatically recommended based on the identified weaknesses. Thus, the evaluation skill of the evaluator can be appropriately analyzed and the fairness and quality of evaluation can be increased. The display control unit 124 may cause the display to display the evaluation skill of the evaluator analyzed by the skill analysis unit 126.

The content selection unit 127 is an example of a content selection unit that selects (sets) training content for the evaluator from the storage unit 121 via the storing and reading unit 122 based on the evaluation skill of the evaluator. To enhance the evaluation skill of the evaluator, the content selection unit 127 has a function of selecting and setting training content (e.g., an interactive role-play scenario) stored in the storage unit 121 based on the evaluation result of the evaluation skill of the evaluator estimated by the skill analysis unit 126. In the present embodiment, the content selection unit 127 includes a configuration that uses generative AI technology to dynamically generate a scenario and a role-play setting in accordance with the needs and the skill level of the evaluator. Specifically, the skill analysis unit 126 analyzes the evaluation result of the evaluation skill of the evaluator to identify the evaluation skill that is desirably enhanced. This analysis result (such as the evaluation skill identified by the skill analysis unit 126) is sent to the content selection unit 127, and serves as basic information for designating a condition to be used by generative AI to dynamically generate a scenario. The generative AI acquires a base scenario stored in the storage unit 121. The base scenario includes typical interactive situations for each skill (e.g., feedback practice, positive communication enhancement, and bias removal scenarios) and basic interaction patterns. The generative AI dynamically changes the acquired base scenario in accordance with the skill level and the goal of the evaluator.

Specific examples of the training content corresponding to the weaknesses in the skill of the evaluator are presented below.

### (1) Setting of Training Content for Insufficient Consistency and Stability of Evaluation

When the evaluation criteria are not consistent, it is determined that the evaluator has an issue in understanding the criteria or stability of the evaluation. In this case, the content selection unit 127 sets a role-play scenario focused on "unification of evaluation criteria". Specifically, the role-play scenario is an interactive scenario in which the evaluator evaluates AI subordinates for different cases and has content that allows the evaluator to apply consistent criteria. For example, a scenario is set in which the evaluator performs feedback multiple times in different circumstances to check whether the evaluator can perform evaluation based on the same criteria.

### (2) Setting of Training Content for Improving Communication Skill

When the analysis of the meeting log DB 221b indicates that communication of the evaluator is unclear and the ratio between positive and negative expressions is unbalanced, the content selection unit 127 sets a role-play scenario for "enhancing instruction skills using clear expressions." This role-play scenario prompts the evaluator to provide specific and clear feedback to AI subordinates, so that the evaluator practices giving particular behavioral instructions. The role-play scenario provides a circumstance in which the evaluator is prompted to make the interaction more specific through questions such as "Please be more specific" and "How should it be done?" from the AI subordinates.

### (3) Setting of Training Content for Improving Constructive Feedback Ability

When content of feedback is ambiguous and specific advice for improvement is insufficient, a "scenario for providing constructive feedback" is set. This scenario requests the evaluator to indicate specific advice for improvement and action guidelines to AI subordinates. The AI subordinates ask the evaluator questions such as "Specifically, what improvements should be made?" and "What should be done as the next action?" to support the evaluator in clearly indicating the action guidelines.

### (4) Setting of Training Content for Fairness and Bias Reduction

When the evaluatee questionnaire DB 221c suggests a possibility of bias in the evaluator, a role-play scenario themed on "evaluation based on fair criteria" is set. This role-play scenario is a scenario in which AI subordinates with different attributes (e.g., age and gender) are set and the evaluator is guided to give fair feedback for the attributes. For example, the AI subordinates ask the evaluator a question "Are fair evaluations being conducted in consideration of age and background?" to provide the evaluator with an opportunity to reconfirm an unconscious prejudice and to practice making an objective evaluation.

### (5) Setting of Training Content for Improving Ratio between Positive and Negative Expressions

When it is determined that positive expressions are insufficient in feedback and there is a bias toward comments for improvement, a "scenario for enhancing positive feedback" is set. This scenario sets a circumstance in which the evaluator provides guidance to AI subordinates using affirmative expressions. The AI subordinates ask the evaluator questions such as "Please specifically tell me what was good" and "Along with points to be improved, could you also tell me the good points?". This allows the evaluator to practice consciously using positive elements.

### (6) Setting of Training Content to Enhance Motivation Increasing Effect

When the evaluation for the "degree of motivation increase" in the evaluatee questionnaire DB 221c is low, a role-play scenario themed on "providing feedback that promotes growth" is set.

This scenario sets circumstances in which the evaluator provides feedback that produces willingness to grow in AI subordinates, and provides training in which the evaluator practices feedback that increases motivation through questions from the AI subordinate such as "How should growth be aimed for through the feedback?"

The content selection unit 127 provides an interface that allows the evaluator to experience and operate the set interactive role-play scenario. The scenario is configured to allow the evaluator to practically hone the skills and work on self-improvement through this interface.

As the interactive role-play scenario, a scenario focusing on a specific evaluation (skill) item desired to be improved is set first based on the evaluation skill of the evaluator analyzed by the skill analysis unit 126. When a skill desired to be improved the most is, for example, "constructive feedback ability" which is determined to be low, a scenario aimed at "providing specific instructions for improvement" is automatically selected. The content selection unit 127 then constructs the scenario in detail. An AI avatar acting as a subordinate starts dialogue with a set personality and dialogue style. During the role play, the AI subordinate responds according to the situation. For example, when the evaluator issues an ambiguous instruction, the AI avatar responds with a question such as "Specifically, what action for improvement is desirable?" to prompt the evaluator to issue a detailed instruction. Since reactions of the AI avatar are adjusted in accordance with the personality type set in advance, the evaluator can gain the ability to handle the situations close to actual practice through reactions of different subordinates. After the role play ends, the evaluator evaluation system 1 analyzes contents of utterances, specificity of instructions, the ratio between positive and negative expressions, and the like, and quantifies, as a score, a degree of skill improvement. When the score is low, advice such as "Please present more specific advice for improvement next time" is presented. The consistency of evaluation and the presence or absence of bias are also checked, and whether evaluation is conducted fairly for attributes of the evaluatees is also analyzed.

The content selection unit 127 also analyzes skill data of the evaluator acquired during the role play and integrates the analysis result into the data accumulated in the skill analysis unit 126 in the past to evaluate a progress status of skill improvement. Specifically, the improvement status of each skill index is analyzed in a process below.

In the analysis of contents of utterances during the role play, text of the content of the feedback given to the AI subordinate by the evaluator is analyzed in real time, and indices such as the "specificity", the "ratio between positive and negative expressions", and the "improvement in clarity of instructions" are extracted. The content selection unit 127 compares the current feedback data with the past feedback data accumulated in the skill analysis unit 126 to check whether the specificity has increased, for example. When the specificity has increased, the continuous improvement is evaluated. When the specificity is insufficient, a scenario for further increasing the specificity is proposed in the next training.

In terms of the consistency, the content selection unit 127 checks whether the evaluator is giving consistent feedback with reference to the past data. Whether the evaluator gives feedback based on consistent criteria for similar evaluation skills is analyzed and whether the evaluation criteria are stable is verified. When the consistency varies, the skill analysis unit 126 presents the necessity of training with reference to the issues detected in the past to support the evaluator in applying the stable evaluation criteria.

In the analysis of the ratio between positive and negative expressions, it is evaluated whether feedback during the role play is not biased toward being critical or positive. The content selection unit 127 compares data of the current session with the data of past sessions accumulated in the skill analysis unit 126 to check whether positive feedback has increased. If no increasing trend is observed, it is indicated as a point to be improved that provision of positive feedback is rare, and training for "increasing positive expressions" is recommended.

In the verification of fairness and bias reduction, the content selection unit 127 analyzes whether feedback during the role play is fair while checking whether there is a bias toward a specific attribute in the past. In particular, when different attributes (e.g., age and gender) are set for AI subordinates, the content selection unit 127 compares the content and tone of the feedback between the individual settings to determine the presence or absence of bias. When there is less bias, it is determined that the evaluation has improved based on integration with the past data. When bias remains, training to encourage correction is desired.

The analysis of the clarity and tone of communication also evaluates non-verbal elements such as the speaking speed, the tone, the intonation, and the line of sight from camera and microphone data. The content selection unit 127 compares the current non-verbal data with past non-verbal data to evaluate whether improvement is observed. For example, when maintaining the speaking speed and the line of sight has improved, it is determined that the "quality of communication is improving". When no improvement is observed, training on the line of sight and the tone is proposed for the next training.

In terms of the motivation increasing effect as well, the extent to which feedback of the evaluator affects the motivation of the AI subordinate is analyzed based on reactions exhibited by the AI subordinate during the role play. The content selection unit 127 compares the current motivation increasing effect data with motivation increasing effect data obtained in the past role plays in the skill analysis unit 126, and evaluates whether positive effects are continuously exhibited or whether repulsive reactions are decreasing. When the feedback contributes to motivation increase, guidance to proceed to the next step is provided. When improvement is desired, training on "feedback that produces motivation in a subordinate" is proposed.

As described above, the content selection unit 127 collectively analyzes the real-time analysis results of the evaluation skills and the past data to clarify how much the evaluator has made progress and the skill item to be desirably further improved. Thus, the content selection unit 127 plays a role of supporting appropriate selection of content of next training.

The content selection unit 127 has a role of analyzing a result of role-play experiences and grasping a virtual skill improvement degree and a deficiency of the evaluator. The content selection unit 127 analyzes the indices such as the contents of utterances, the specificity, and the ratio between positive and negative expressions in the interactive role play and generates an evaluation result of the evaluation skill in a virtual environment. This evaluation result is of an analysis of the evaluation skill based on a virtual scenario, and does not directly reflect the performance in actual tasks and evaluation situations. However, this evaluation result indicates a course of action such as which skill the evaluator desirably focuses on for improvements in the next role play, and is used as reference data for the evaluator to efficiently improve the skill.

At a next evaluation meeting timing, actual pieces of data such as evaluation meeting data, personnel information data, and evaluatee questionnaire data are newly acquired, and the skill analysis unit 126 analyzes the actual evaluation skill of the evaluator. The analysis of the evaluation skill based on the actual pieces of data reflects the skill level exhibited by the evaluator in real evaluation situations and measures a real skill improvement degree different from the training result in the virtual environment. Specifically, based on the evaluation meeting data accumulated at each timing, the skill analysis unit 126 quantitatively evaluates six items, namely, the "consistency and stability of evaluation", the "communication skills", the "constructive feedback ability", the "fairness and bias", the "ratio between positive and negative expressions", and the "motivation increasing effect" of the evaluator, and continuously analyzes the skill improvement degree at each timing. Thus, a difference between the virtual evaluation skill acquired by the evaluator through the role play and the real skill exhibited in actual evaluation meetings and the improvement state can be clarified.

The evaluator performs practice and adjustments to improve the skills through role-play experiences via the content selection unit 127, and makes use of the virtual skill analysis result for the next training. At the same time, in the actual evaluation meetings, the real skill analysis result is presented. In this manner, the skill improvement degree of the evaluator desired in tasks can be measured.

A hardware configuration of the evaluator evaluation system 1 or the personnel evaluation system 2 will be described next with reference to FIG. 2. The hardware configuration of the evaluator evaluation system 1 or the personnel evaluation system 2 illustrated in FIG. 2 may additionally include or omit a component as desired.

FIG. 2 is a diagram illustrating an example of the hardware configuration of the evaluator evaluation system 1. Since the personnel evaluation system 2 has substantially the same configuration as the evaluator evaluation system 1, the evaluator evaluation system 1 will be described below. The description also applies to the personnel evaluation system 2. The evaluator evaluation system 1 is implemented by a computer, for example, and includes a central processing unit (CPU) 101 (401), a read-only memory (ROM) 102 (402), a random access memory (RAM) 103 (403), a hard disk (HD) 104 (404), an HDD controller 105 (405), and the display 106a (406a) as illustrated in FIG. 2. The evaluator evaluation system 1 includes a communication interface (I/F) 107 (407), a sensor I/F 108 (408), an audio input/output I/F 109 (409), an input I/F 110 (410), a medium I/F 111 (411), a digital versatile disc-rewritable (DVD-RW) drive 112 (412), a keyboard 110a (410a), a mouse 110b (410b), a microphone 109b (409b), and a speaker 109a (409a). Reference numerals in parentheses indicate respective components of the personnel evaluation system 2.

The CPU 101 (401) controls the overall operation of the evaluator evaluation system 1 (the personnel evaluation system 2). The ROM 102 (402) stores a program used for driving the CPU 101 (401). The RAM 103 (403) is used as a work area for the CPU 101 (401). The display 106a (406a) displays various types of information such as a cursor, a menu, a window, characters, or an image. In the present embodiment, the display 106a (406a) functions as an example of a display means.

The HD 104 (404) stores various types of data such as a program. The HDD controller 105 (405) controls reading and writing of various types of data from and to the HD 104 (404) under the control of the CPU 101 (401). The evaluator evaluation system 1 (the personnel evaluation system 2) may have a hardware configuration in which the HD 104 (404) and the HDD controller 105 (405) are replaced with a solid-state drive (SSD).

The microphone 109b (409b) and the speaker 109a (409a) are devices used to acquire uttered voice and facial expressions of the user for a one-on-one meeting in the personnel evaluation system 2. These devices are managed and controlled by the CPU 101 (401). The input audio information and image information are recorded on the ROM 102 (402) and the HD 104 (404).

The network I/F 107 (407) is an interface circuit that controls communication of data with various external devices through a communication network. The keyboard 110a (410a) and the mouse 110b (410b) are types of input means to receive user operations such as pressing, clicking, and tapping on a predetermined button or icon arranged on the display 106a (406a) to operate the evaluator evaluation system 1 (the personnel evaluation system 2). The medium I/F 111 (411) reads or writes (stores) data from or to a recording medium 111a (411a) such as a flash memory. The DVD-RW drive 112 (412) controls reading or writing of data from or to a DVD 112a (412a). Examples of a bus line 113 (413) include an address bus and a data bus, which electrically connect the components including the CPU 101 (401) to one another.

For example, the above-described program may be recorded in an installable or executable file format on a computer-readable recording medium for distribution, or may be downloaded via a network for distribution. Examples of the recording medium include a compact disc recordable (CD-R), a digital versatile disc (DVD), a Blu-ray^{®} disc, a secure digital (SD) card, and a Universal Serial Bus (USB) memory. The recording medium may be provided in the form of a program product to domestic or foreign users.

For example, the evaluator evaluation system 1 (the personnel evaluation system 2) executes the program according to the present embodiment to implement an information processing method according to the present embodiment.

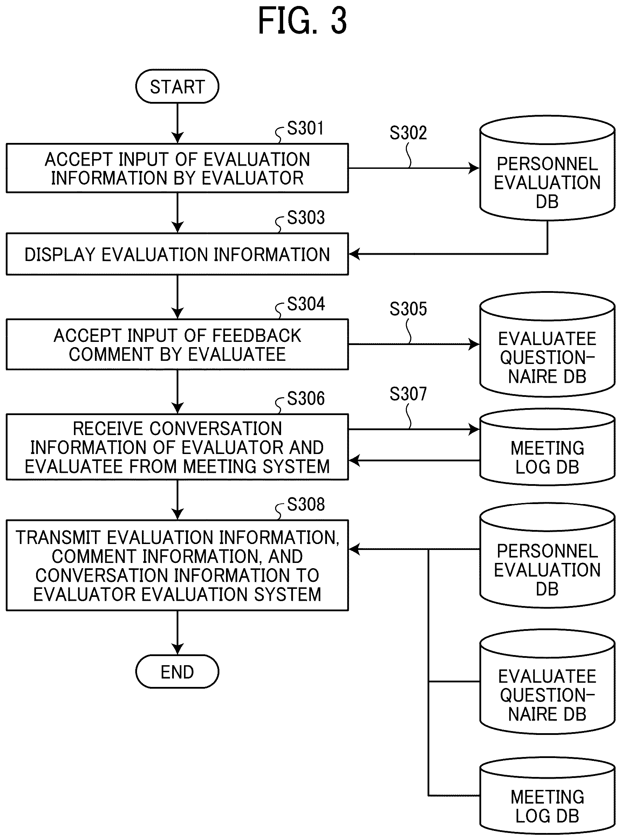

FIG. 3 is a flowchart of an example of a transmission process of evaluation information or the like in the personnel evaluation system 2. The accepting unit 224 accepts input of evaluation information from the evaluator in step S301, and stores the evaluation information in the personnel evaluation DB 221a in step S302. The display control unit 223 displays the accepted evaluation information on a display such as the display 406a in step S303.

The accepting unit 224 then accepts input of a feedback comment from the evaluatee in step S304, and stores the accepted feedback comment in the evaluatee questionnaire DB 221c in step S305. The transmission and reception unit 225 receives conversation information from the meeting system in step S306, and stores the received conversation information in the meeting log DB 221b in step S307. The transmission and reception unit 225 transmits information such as the evaluation information, the comment information, and the conversation information to the evaluator evaluation system 1 in step S308. The transmission and reception unit 225 may receive video information corresponding to the conversation information together with the conversation information from the meeting system, and store the received video information together with the conversation information in the meeting log DB 221b.

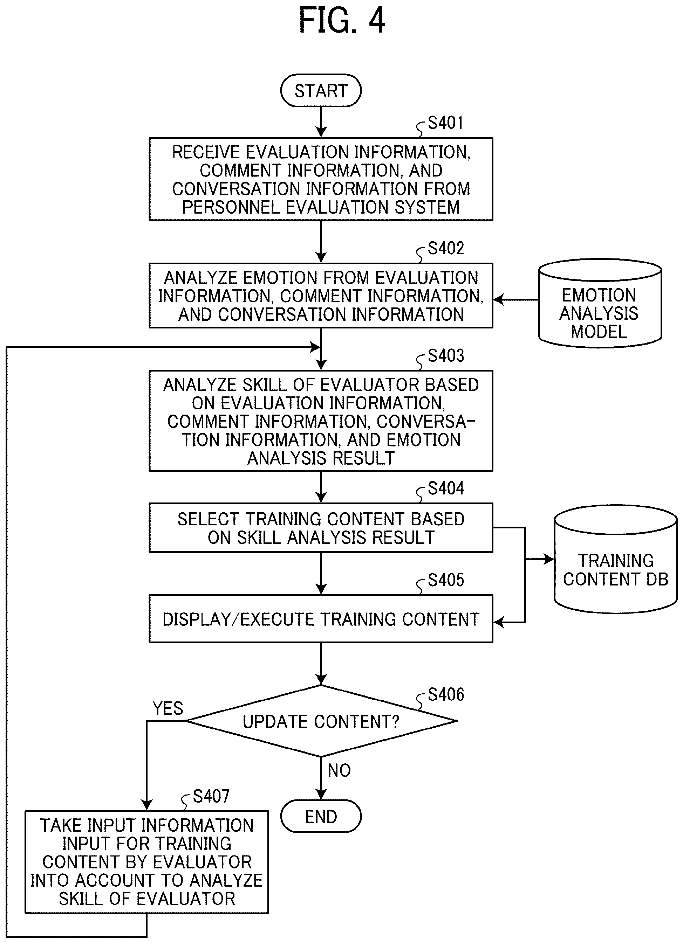

FIG. 4 is a flowchart of an example of a training content display process in the evaluator evaluation system 1. The acquisition unit 123 receives the evaluation information, the comment information, and the conversation information from the personnel evaluation system 2 in step S401. The emotion analysis unit 125 analyzes an emotion of the evaluatee and an emotion of the evaluator based on the evaluation information, the comment information, and the conversation information in step S402. The emotion analysis unit 125 may analyze an emotion of the evaluatee and an emotion of the evaluator based on the video information corresponding to the conversation information.

The skill analysis unit 126 analyzes the evaluation skill of the evaluator based on the evaluation information, the comment information, the conversation information, and an analysis result of the emotions of the evaluatee and the evaluator, and displays an analysis result of the evaluation skill in step S403. The content selection unit 127 selects training content based on the analysis result of the evaluation skill of the evaluator in step S404, and displays and executes the selected training content in step S405.

When the training content is updated (YES in step S406), the content selection unit 127 takes the input information input for the training content by the evaluator into account to analyze the evaluation skill of the evaluator and update the training content in step S407. The process then returns to step S403. When the training content is not updated (NO in step S406), the content selection unit 127 ends the training content display process.

As described above, the evaluator evaluation system 1 uses AI to analyze data acquirable from the personnel evaluation system 2, identifies weaknesses in the evaluation skill of an evaluator, and automatically recommends training content based on the identified weaknesses. Thus, the evaluator evaluation system 1 can appropriately analyze the evaluation skill of the evaluator and increase the fairness and quality of evaluation. The skill analysis unit 126 takes the emotion analyzed by the emotion analysis unit 125 into account to analyze the evaluation skill. Thus, evaluation items dependent on the emotion among the evaluation items illustrated in FIG. 1D can be appropriately evaluated.

The program to be executed by the evaluator evaluation system 1 is recorded and provided in an installable or executable file format on a computer-readable recording medium such as a compact disc read-only memory (CD-ROM), a flexible disk (FD), a CD-R, or a DVD.

The program to be executed by the evaluator evaluation system 1 may be stored in a computer connected to a network such as the Internet, and downloaded and thus provided through the network. The program to be executed by the evaluator evaluation system 1 may be provided or distributed via a network such as the Internet.

The program according to the present embodiment may be preinstalled and provided on the ROM 102 or the like. The program to be executed by the evaluator evaluation system 1 has a module configuration including the above-described units (i.e., the acquisition unit 123, the display control unit 124, the emotion analysis unit 125, the skill analysis unit 126, and the content selection unit 127). A processor such as the CPU 101 that is actual hardware reads the program from the above-described recording medium and executes the program, so that the above-described units are loaded to a main storage device and the acquisition unit 123, the display control unit 124, the emotion analysis unit 125, the skill analysis unit 126, and the content selection unit 127 are generated in the main storage device.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing system (1) comprising:
an acquisition unit (123) configured to acquire comment information input by a first user in association with evaluation information on an evaluation made for the first user by a second user; and
a skill analysis unit (126) configured to analyze an evaluation skill of the second user based on the comment information.

2. The information processing system (1) according to claim 1, further comprising:
a content selection unit (127) configured to select training content for the second user based on the evaluation skill; and
a display control unit (124) configured to cause a display to display the selected training content.

3. The information processing system (1) according to claim 1, wherein
the acquisition unit (123) is configured to further acquire the evaluation information, and
the skill analysis unit (126) is configured to take the evaluation information into account to analyze the evaluation skill.

4. The information processing system (1) according to claim 1, wherein
the acquisition unit (123) is configured to further acquire conversation information on a conversation between the second user and the first user, and
the skill analysis unit (126) is configured to take the conversation information into account to analyze the evaluation skill.

5. The information processing system (1) according to claim 2, wherein
the acquisition unit (123) is configured to further acquire input information input for the training content by the second user, and
the skill analysis unit (126) is configured to take the input information into account to analyze the evaluation skill.

6. The information processing system (1) according to claim 1, further comprising:
an emotion analysis unit (125) configured to analyze an emotion of the first user based on the comment information, wherein
the skill analysis unit (126) is configured to take the emotion of the first user into account to analyze the evaluation skill.

7. The information processing system (1) according to claim 3, further comprising:
an emotion analysis unit (125) configured to analyze an emotion of the second user based on the evaluation information, wherein
the skill analysis unit (126) is configured to take the emotion of the second user into account to analyze the evaluation skill.

8. The information processing system (1) according to claim 4, further comprising:
an emotion analysis unit (125) configured to analyze an emotion of the first user and an emotion of the second user based on the conversation information, wherein
the skill analysis unit (126) is configured to take the emotion of the first user and the emotion of the second user into account to analyze the evaluation skill.

9. A computer-implemented information processing method, comprising:
acquiring (S401) comment information input by a first user in association with evaluation information on an evaluation made for the first user by a second user; and
analyzing (S403) an evaluation skill of the second user based on the comment information.

10. Carrier means carrying computer readable code for controlling a computer system to carry out the information processing method of claim 9.
